# FASCICULE DE BREVET EUROPEEN

(11) **EP 2 103 919 B1**
(45) Date de publication et mention de la délivrance du brevet: **01.02.2012**
(21) Numéro de dépôt: 09154607.7
(22) Date de dépôt: 09.03.2009
(51) Int. Cl.: G01L 3/10, G01L 5/22, B29C 65/02

(54) **Dispositif de détection de couple pour direction assistée de véhicule automobile**
Vorrichtung zur Erkennung des Drehmoments für ein Hilfslenksystem eines Kraftfahrzeugs
Torque detection device for automobile power-assisted steering

(30) Priorité: 18.03.2008 FR 0801474
(43) Date de publication de la demande: 23.09.2009
(73) Titulaire: Jtekt Europe, 69540 Irigny (FR)
(72) Inventeur: Plataret, Nicolas, 69008, LYON (FR); Rey, Laurent, 69100, VILLEURBANNE (FR)
(74) Mandataire: Maureau, Philippe

(56) Documents cités:
- JP-A- 2005 156 468
- US-A1- 2003 167 857
- WATSON M N: "WELDING PLASTICS FOR THE AUTOMOTIVE INDUSTRY" SAE TRANSACTIONS, SOCIETY OF AUTOMOTIVE ENGINEERS, INC., WARRENDALE, PA, US, 1 janvier 1987 (1987-01-01), pages 3659-3667, XP000775946 ISSN: 0096-736X
- RENNERT ET AL: "Laser-adapted construction for plastic welding" INTERNET CITATION, [Online] XP007901553 Extrait de l'Internet: URL:http://www.rofin.com/deutsch/anwendung en/laser-mikro-micro/data/E_PlastEurope02- 04_Laser_adapted_Construction.pdf> [extrait le 2007-01-15]

## Description

La présente invention concerne, de façon générale, les systèmes de direction des véhicules automobiles. Elle se rapporte, plus particulièrement, à un dispositif de détection de couple pour une direction assistée de véhicule automobile, ce dispositif étant destiné à mesurer le couple exercé par le conducteur du véhicule sur le volant de conduite, en vue de l'assistance électrique ou hydraulique de la direction.

Dans les systèmes de direction assistée, le couple ou l'effort d'assistance fourni pour soulager le conducteur du véhicule est asservi au couple exercé par le conducteur sur le volant de conduite, ce qui rend nécessaire la présence d'un capteur de couple au volant, à partir duquel est commandée l'intensité de l'action d'assistance. Parmi les capteurs de couple utilisables, les capteurs les plus habituels utilisent la variation d'angle d'une barre de torsion. Une catégorie plus particulière de dispositifs de détection de couple, utilisés notamment dans les systèmes de direction, comprend des capteurs fonctionnant sur un principe magnétique, tels que les capteurs décrits dans les documents de brevets FR 2 837 282 Al (ou son équivalent US 2003/167857 A1), FR 2 872 902 A1, US 2005/0126309 A1 et US 6 988 422 B2.

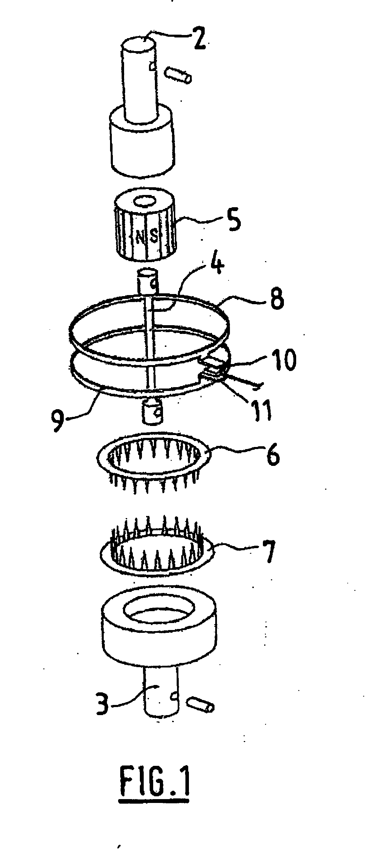

En se référant à la figure 1 du dessin schématique annexé, ce genre de capteur de couple est intercalé entre un arbre rotatif d'entrée 2 et un arbre rotatif de sortie 3, et il comprend cinq éléments principaux, qui sont :
- une barre de torsion 4 reliant mécaniquement les extrémités coaxiales de l'arbre d'entrée 2 et de l'arbre de sortie 3 ;
- un ensemble d'aimants permanents 5 solidaire de l'extrémité de l'arbre d'entrée 2 ;
- une paire de culasses magnétiques 6 et 7 solidaire de l'extrémité de l'arbre de sortie 3 ;
- un support collecteur de flux magnétique, composé de deux bagues collectrices 8 et 9, surmoulées par un matériau plastique, de sorte que ces bagues collectrices 8, 9 sont présentes sur la face intérieure de la masse surmoulée, et d'un bouclier électromagnétique (ici non représenté) ;
- un capteur de flux magnétique, composé de deux capteurs à effet Hall 10 et 11 surmoulés par une matière thermoplastique et comprenant un bouclier électromagnétique (ici non représenté).

Le support collecteur de flux, et le capteur de flux, sont des éléments fixes à monter dans le système de direction. Plus particulièrement, dans des systèmes de direction connus, le support collecteur de flux est placé directement dans l'un des carters en aluminium du système de direction. Le capteur de flux vient ensuite s'intégrer dans le support collecteur de flux, au moyen de formes complémentaires appropriées. Ces éléments sont ensuite rendus solidaires entre eux et avec le carter en aluminium au moyen d'une ou de plusieurs vis d'assemblage, et grâce à un ou des trous filetés réalisés préalablement ou non dans le carter, des joints assurant l'étanchéité de l'assemblage.

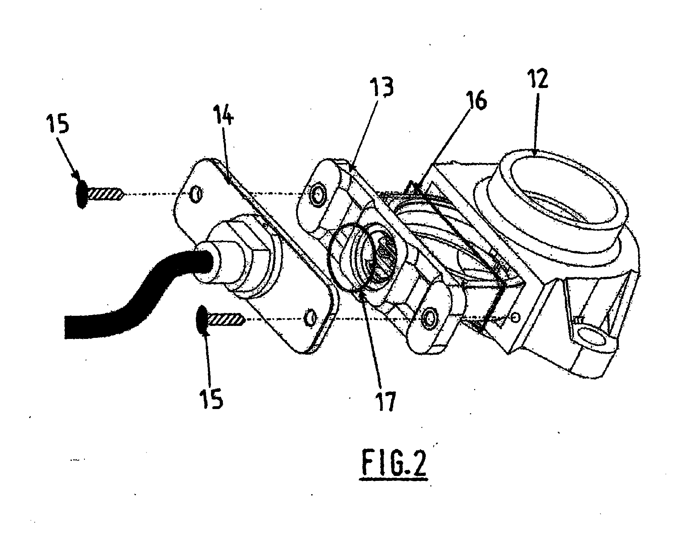

Un exemple d'un tel mode connu d'assemblage est illustré par la figure 2, sur laquelle
- la référence 12 désigne le carter en aluminium ;
- la référence 13 désigne le support collecteur de flux ;
- la référence 14 désigne le support du capteur de flux;
- les vis d'assemblage sont indiquées en 15; et
- les joints d'étanchéité intercalés sont respectivement désignés 16 et 17.

Les dispositifs existants de ce genre présentent l'inconvénient d'être délicats et longs à assembler, ce qui affecte la précision de l'assemblage et rend aussi la fonction « capteur de couple » coûteuse. En outre, l'efficacité des joints d'étanchéité n'étant pas parfaite, des infiltrations sont fréquemment constatées, entraînant elles-mêmes de coûteuses reprises.

La présente invention vise a remédier à ces inconvénients, et elle donc pour but de fournir un dispositif de détection de couple, du genre ici concerné, dont l'assemblage est simpliflé donc rendu plus économique, tout en améliorant la précision de montage ainsi que l'étanchéité.

Ce probléme est résolu, dans un dispositif de détection de couple pour une direction assistée de véhicule automobile, le dispositif comprenant une barre de torsion reliant un arbre d'entrée à un arbre de sortie, un ensemble d'aimants permanents solidaire de l'arbre d'entrée, une paire de culasses magnétiques solidaire de l'arbre de sortie, un support collecteur de flux avec intérieurement deux bagues collectrices surmoulées par un matériau plastique, support collecteur qui est monté dans un carter du système de direction, et un capteur de flux magnétique monté sur le support collecteur, le capteur de flux et le support collecteur de flux étant réalisés majoritairement dans des matières plastiques identiques ou compatibles, et le capteur de flux étant assemblé au support collecteur de flux de manière à former avec ce support une structure monobloc non démontable, rigide et étanche en prévoyant que le support collecteur de flux est lui-même soudé sur le carter du système de direction, ce carter étant réalisé majoritairement dans une matière plastique identique à ou compatible avec celle dudit support, de telle sorte que le carter, le support collecteur de flux et le capteur forment une structure monobloc rigide et étanche.

Le capteur de flux et le support collecteur de flux peuvent être assemblés par une soudure par ultrasons, ou par une soudure par vibrations, ou encore par une soudure au laser.

Ainsi, il est constitué une structure monobloc, réalisée majoritairement en une matière plastique appropriée, qui réunit un carter de système de direction, le support collecteur de flux et le capteur de flux, fabriqués séparément puis réunis par soudure. Dans cette structure, le support collecteur de flux surmoule de façon connue en soi les deux bagues collectrices du dispositif, et il est assemblé par soudure d'une part au carter réalisé dans une matière identique ou compatible, et d'autre part à une partie du capteur de flux elle aussi réalisée dans une matière identique ou compatible. La forme donnée aux zones de soudure, en particulier configurées en cordons de soudure, assure la solidité de l'assemblage et l'étanchéité de celui-ci.

On entend ici, par « matière plastique appropriée », un matériau synthétique ou composite mécaniquement robuste, stable dimensionnellement clans une plage de températures allant typiquement de -40°C à +120°C, et résistant à l'environnement chimique d'un système de direction (huile, graisse, eau, salissures, brouillard salin, ...). Ces matières sont soit thermoplastiques, soit thermo-durcissables. Elles sont communément renforcées par des fibres de verre pour augmenter leur rigidité (module d'Young) et leur ténacité (résistance au choc Charpy). Il s'agit pour la plupart de thermoplastiques « hautes performances » présentant une bonne résistance mécanique à des températures élevées (température de déflexion sous charge).

Des exemples de matières thermoplastiques convenant à ce type d'application sont donnés dans le tableau ci-dessous.

| Matière | Module d'Young (GPa) mesuré à 20°C ISO 527⁻¹ | Température de fléchissement sous charge (1,8 MPa) ISO 75-1/-2 | Résistance au choc Charpy (kJ/m²) (+23°C) ISO 179/1eU |
|---|---|---|---|
| PA66 GF 50 Polyamide « 66 » renforcé par 30% de fibre de verre | 17 | 250 | 95 |
| PA46 GF 50 Polyamide « 46 » renforcé par 30% de fibre de verre | 17 | 295 | 100 |
| PA 6T/66 GF 50 Polyamide semi-aromatique renforcé par 50% de fibre de verre | 17 | 285 | 85 |
| PPS GF 40 Poly phenylène sulphone renforcé par 40% de fibre de verre | 14 | 260 | 48 |

Par « matières plastiques identiques ou compatibles », on entend que les matières à souder doivent être chimiquement compatibles. Il peut s'agir aussi de matières dont la base thermoplastique est identique, leurs formulations ne variant que sur des adjuvants (colorants, renforts, ...). Il peut s'agir aussi de matières dont la base thermoplastique est compatible ; on connaît par exemple la compatibilité entre le polycarbonate et le poly methyl methacrylate.

L'invention sera mieux comprise, et d'autres caractéristiques seront mises en évidence, à l'aide de la description qui suit, en référence au dessin schématique annexé représentant, à titre d'exemples, deux formes d'exécution de ce dispositif de détection de couple pour direction assistée de véhicule automobile.
Figure 1 (déjà mentionnée) est une vue en perspective éclatée d'un dispositif détecteur de couple existant ;
Figure 2 (déjà mentionnée) est une vue en perspective éclatée illustrant le mode d'assemblage actuel d'un tel dispositif détecteur de couple ;
Figure 3 est une vue en coupe d'un dispositif de détection de couple selon la présente invention, montrant plus particulièrement le capteur de flux et le support collecteur de flux avant soudure ;
Figure 4 est une vue en coupe d'un autre dispositif de détection de couple selon l'invention, montrant le capteur de flux, le support collecteur de flux et le carter après soudure.

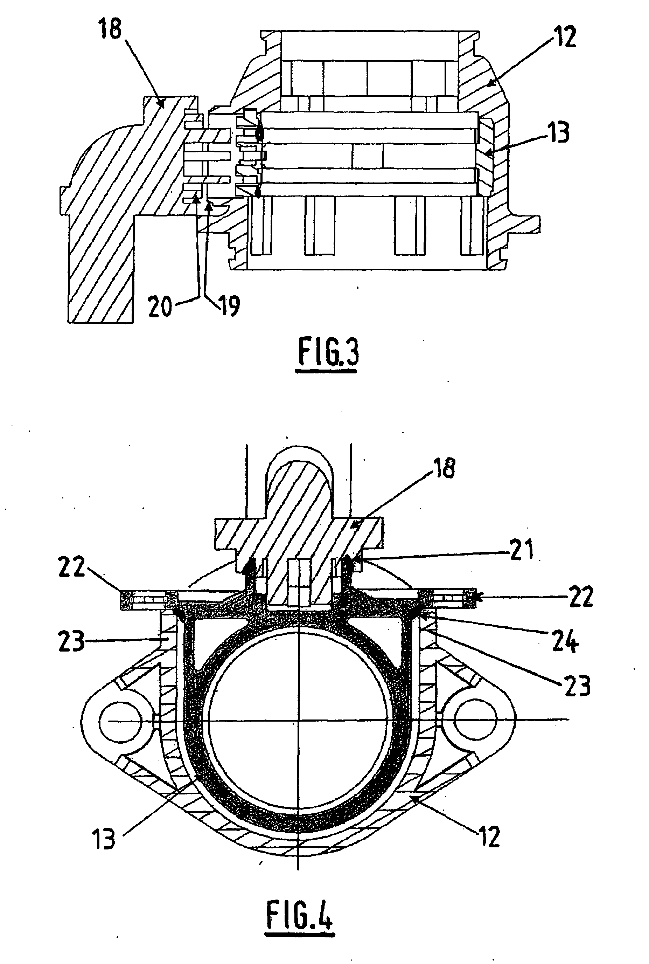

En se référant à la figure 3, on considère plus particulièrement, dans un dispositif de détection de couple du genre précédemment défini, le carter 12 du système de direction et le support collecteur de flux 13 qui prend place dans ce carter 12, ainsi que le capteur de flux 18.

Le support collecteur de flux 13 présente une zone d'assemblage 19 appropriée, complémentaire d'une zone d'assemblage 20 appartenant au capteur de flux 18, par exemple avec des formes crénelées correspondantes. Le capteur de flux 18 est réalisé dans une matière plastique identique à celle du support collecteur de flux 13, ou du moins une matière plastique compatible avec celle dudit support 13. Lors de l'opération de soudure, telle qu'une soudure par ultrasons, les zones d'assemblage respectives 19 et 20 du support collecteur de flux 13 et du capteur de flux 18 sont rapprochées et mises en contact, et elles sont sollicitées de manière appropriée de sorte que la température des deux parties augmente localement jusqu'à la fusion de la matière plastique. Une interpénétration de ces deux parties se produit alors, formant un cordon de soudure qui conduit à une solidarisation des deux parties une fois l'assemblage refroidi. Le capteur de flux 18 et le collecteur de flux 13 forment ainsi, finalement, une structure monobloc non démontable, rigide et étanche.

En se référant maintenant à la figure 4, relative à un autre exemple de réalisation, le support collecteur de flux 13 et le capteur de flux 18 présentent ici encore des parties de formes complémentaires, au niveau desquelles est formé un cordon de soudure 21. De plus, le support collecteur de flux 13 est réalisé dans une matière plastique identique à celle du carter 12, ou du moins compatible avec celle du carter 12. Ce support collecteur de flux 13 possède une partie périphérique 22, en saillie, prévue pour être assemblée par soudage à la périphérie du carter 12. Lors de l'opération de soudure, les parties complémentaires du carter 12 et du support collecteur de flux 13 sont mises en contact et sollicitées de manière appropriée, pour s'interpénétrer en formant un autre cordon de soudure 24. Ainsi, après soudure, on obtient une structure monobloc qui réunit, de façon rigide et étanche, le carter 12, le support collecteur de flux 13 et le capteur de flux 18.

Par « sollicitées de manière appropriée » on englobe ici différentes techniques utilisables pour solliciter les pièces à assembler, en vue d'élever localement la température. On connaît ainsi les sollicitations mécaniques dans la soudure par vibrations ou par ultrasons associées à une pression importante sur le cordon à souder. On connaît également des sollicitations thermiques indirectes par rayonnement laser ou infrarouge ou par mise en contact direct du cordon avec un élément chauffant. Dans tous les cas, il s'agit d'obtenir une interpénétration des chaînes polymères, qui conduit à la soudure des pièces concernées, à savoir la soudure du capteur de flux 18 sur le support collecteur de flux 13, et la soudure de ce support 13 sur le carter 12. La forme des parties en contact dans chaque zone d'assemblage doit permettre une concentration de la sollicitation dans une zone particulière, bien localisée.

Les pièces ici concernées, à savoir le carter 12, le support collecteur de flux 13 et le capteur 18, sont réalisées avantageusement en une matière thermoplastique « haute température », choisie préférentiellement parmi le polysulfure de phénylène (PPS), le polyphtalamide (PPA) et le polyamide (PA).

L'on ne s'éloignerait pas du cadre de l'invention, telle que définie dans les revendications annexées :
- en réalisant le carter, le support collecteur de flux et le capteur de flux en d'autres matières plastiques, du moment que celles-ci soient identiques ou compatibles, et appropriées pour l'utilisation concernée ;
- en modifiant les formes du carter, du support collecteur de flux et du capteur de flux, du moment que les parties situées dans les zones d'assemblage soient convenablement conformées ;
- en modifiant la structure ou même la conception des éléments du dispositif non concernés directement par l'invention, par exemple la barre de torsion, laquelle peut être remplacée par tout équivalent, tel qu'une pièce en matériau souple déformable élastiquement dans le sens cironférentiel, et reliant l'arbre d'entrée à l'arbre de sortie ;
- en utilisant tout procédé ou toute technologie de soudure pour l'assemblage des pièces concernées;
- en destinant un tel dispositif de détection de couple à une direction assistée pouvant être de tout type, en particulier hydraulique ou électrique.

## Revendications

1. Dispositif de détection de couple pour une direction assistée de véhicule automobile, le dispositif comprenant une barre de torsion (4) reliant un arbre d'entrée (2) à un arbre de sortie (3), un ensemble d'aimants permanents (5) solidaire de l'arbre d'entrée (2), une paire de culasses magnétiques (6 ,7) solidaire de l'arbre de sortie (3), un support collecteur de flux (13) avec intérieurement deux bagues collectrices (8, 9) surmoulées par un matériau plastique, support collecteur qui est monté dans un carter (12) du système de direction, et un capteur de flux magnétique (10,11 ; 18) monté sur le support collecteur (13), le capteur de flux (18) et le support collecteur de flux (13) étant réalisés majoritairement dans des matières plastiques identiques ou compatibles, et le capteur de flux (18) étant assemblé au support collecteur de flux (13) de manière à former avec ce support (13) une structure monobloc non démontable, rigide et étanche,
**caractérisé en ce que**
le capteur collecteur de flux (18) est soudé sur le support collecteur de flux (13), et **en ce que** le support collecteur de flux (13) est lui-même soudé sur le carter (12) du système de direction, ce carter (12) étant réalisé majoritairement dans une matière plastique identique à ou compatible avec celle dudit support (13), de telle sorte que le carter (12), le support collecteur de flux (13) et le capteur (18) forment une structure monobloc rigide et étanche.

2. Dispositif de détection de couple selon la revendication 1, **caractérisé en ce que** le capteur de flux (18) en matière plastique et le support collecteur de flux (13) sont assemblés par une soudure par ultrasons.

3. Dispositif de détection de couple selon la revendication 1, **caractérisé en ce que** le capteur de flux (18) en matière plastique et le support collecteur de flux (13) sont assemblés par une soudure par vibrations.

4. Dispositif de détection de couple selon la revendication 1, **caractérisé en ce que** le capteur de flux (18) en matière plastique et le support collecteur de flux (13) sont assemblés par une soudure au laser.

## Claims

1. A torque detection device for automobile power-assisted steering, the device comprising a torsion bar (4) connecting an input shaft (2) to an output shaft (3), a set of permanent magnets (5) secured to the input shaft (2), a pair of magnetic cylinder heads (6, 7) secured to the output shaft (3), a flux collector support (13) with two inner collecting rings (8, 9) overmolded with a plastic material, collecting support that is mounted in a case (12) of the steering system, and a magnetic flow sensor (10, 11; 18) mounted on the collector support (13), the flow sensor (18) and the flux collector support (13) being made mainly from identical or compatible plastic materials, and the flow sensor (18) being assembled to the flux collector support (13) so as to form a single-piece structure with that support (13) that cannot be disassembled, and is rigid and sealed,
**characterized in that**
the flow collecting sensor (18) is welded on the flux collector support (13), and **in that** the flux collector support (13) is in turn welded on the case (12) of the steering system, said case (12) being made mainly from a plastic material identical to or compatible with that of said support (13), so that the case (12), the flux collector support (13) and the sensor (18) form a rigid and sealed single-piece structure.

2. The torque detection device according to claim 1, **characterized in that** the plastic flow sensor (18) and the flux collector support (13) are assembled by ultrasound welding.

3. The torque detection device according to claim 1, **characterized in that** the plastic flow sensor (18) and the flux collector support (13) are assembled by vibration welding.

4. The torque detection device according to claim 1, **characterized in that** the plastic flow sensor (18) and the flux collector support (13) are assembled by laser welding.

## Patentansprüche

1. Vorrichtung zur Erkennung des Drehmoments für ein Hilfslenksystem eines Kraftfahrzeugs, wobei die Vorrichtung einen Drehstab (4), der eine Eingangswelle (2) mit einer Ausgangswelle (3) verbindet, eine mit der Eingangswelle (2) verbundene Gruppe Dauermagneten (5), ein mit der Ausgangswelle (3) verbundenes Paar Magnetjoche (6, 7), einen Flusssammlerhalter (13) mit zwei internen Sammelringen (8, 9) mit Kunststoffüberzug, wobei der Sammlerhalter in einem Gehäuse (12) des Lenksystems eingebaut ist, und einen magnetischen Flusssensor (10, 11; 18), der auf dem Sammlerhalter (13) montiert ist, umfasst, wobei der Flusssensor (18) und der Flusssammlerhalter (13) mehrheitlich aus identischen oder kompatiblen Kunststoffmaterialien hergestellt sind und wobei der Flusssensor (18) mit dem Flusssammlerhalter (13) derart verbunden ist, dass er mit diesem Halter (13) eine nicht demontierbare, starre und dichte Monoblock-Struktur bildet,
**dadurch gekennzeichnet, dass**
der Flusssammlersensor (18) auf dem Flusssammlerhalter (13) geschweißt ist und dass der Flusssammlerhalter (13) selbst auf dem Gehäuse (12) des Lenksystems geschweißt ist, wobei dieses Gehäuse (12) mehrheitlich aus einem Kunststoff hergestellt ist, der mit dem Kunststoff des Halters (13) derart identisch oder kompatibel ist, dass das Gehäuse (12), der Flusssammlerhalter (13) und der Sensor (18) eine starre und dichte Monoblock-Struktur bilden.

2. Vorrichtung zur Erkennung des Drehmoments nach Anspruch 1, **dadurch gekennzeichnet, dass** der Kunststoff-Flusssensor (18) und der Flusssammlerhalter (13) durch eine Ultraschallschweißnaht verbunden sind.

3. Vorrichtung zur Erkennung des Drehmoments nach Anspruch 1, **dadurch gekennzeichnet, dass** der Kunststoff-Flusssensor (18) und der Flusssammlerhalter (13) durch eine Vibrationsschweißnaht verbunden sind.

4. Vorrichtung zur Erkennung des Drehmoments nach Anspruch 1, **dadurch gekennzeichnet, dass** der Kunststoff-Flusssensor (18) und der Flusssammlerhalter (13) durch eine Laserschweißnaht verbunden sind.
